# EUROPEAN PATENT APPLICATION

(11) **EP 2 339 884 A2**
(43) Date of publication of application: **29.06.2011**
(21) Application number: 11162688.3
(22) Date of filing: 25.06.2004
(51) Int. Cl.: H04W 48/20

(54) **Communication apparatus, communication system, and sector selecting method for the communication apparatus**

(30) Priority: 26.06.2003 JP 2003183364
(62) Divisional of application: 04014962.7
(71) Applicant: NEC Corporation, Tokyo 108-8001 (JP)
(72) Inventor: Arimitsu, Kazuhiro, Tokyo 108-8001 (JP)
(74) Representative: Baronetzky, Klaus

(57) **Abstract**

A communication apparatus receives signals from a plurality of sectors, calculates a plurality of kinds of variation patterns for each of the signals from the sectors, and selects a particular sector suitable for connector with reference to a relationship among the sectors in variation patterns as a calculation result. The variation patterns may be an average, a variation amount, and a variation direction.

## Description

This application claims priority to prior Japanese patent application JP 2003-183364, the disclosure of which is incorporated herein by reference.

### Background of the Invention:

This invention relates to a communication apparatus for use in a mobile telephone apparatus, a mobile information communication terminal, and so on, and a communication system including the communication apparatus and, in particular, to a communication apparatus, a communication system, and a sector selecting method for the communication apparatus, which are capable of selecting a sector suitable for connection .

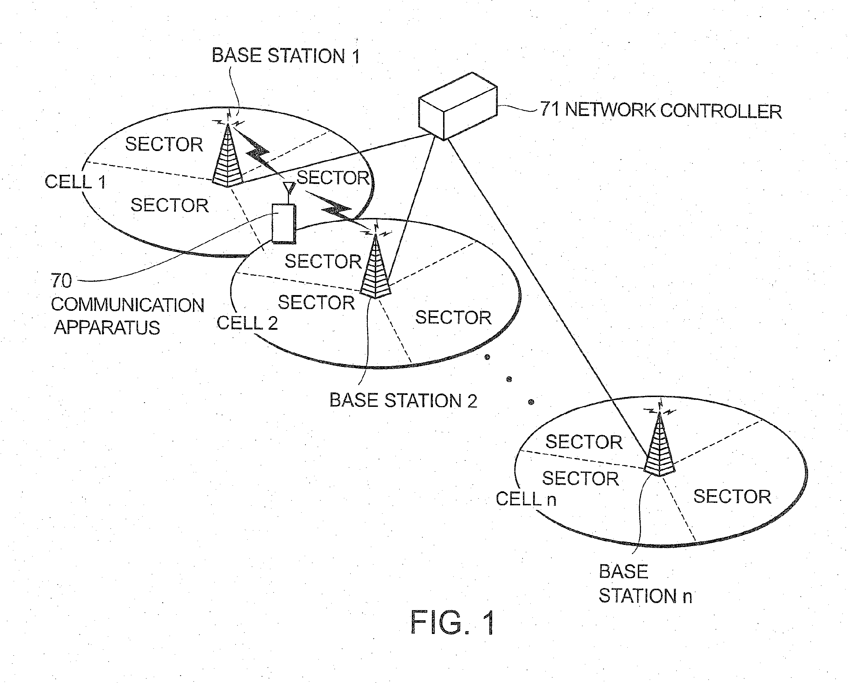

In present-day mobile information communication services, such as a mobile telephone, cellular communication is used. As illustrated in Fig. 1, a typical cellular communication system includes a mobile communication apparatus 70 used by a user, a plurality of base stations (1, 2, ..., n) to be connected to the mobile communication apparatus 70, and a network controller 71 connected to the base stations (1, 2, ..., n).

As illustrated in Fig. 1, a service area of the cellular communication is covered by a plurality of radio zones or cells assigned to the base stations (1, 2, ..., n) for communication with the mobile communication apparatus 70, respectively. Each cell comprises a plurality of sectors corresponding to a plurality of directional antennas of the base station, respectively. The mobile communication apparatus 70 is connected to a suitable one of the directional antennas, i.e., a suitable one of the sectors, depending upon a position of the mobile communication apparatus 70. Thus, mobile communication can be carried out. Therefore, it is important that the mobile communication apparatus 70 maintains connection with a particular sector which can provide stable communication and assure a high reception quality in any state, i.e., during standby, during call origination, during call reception, and during communication. Following movement, it is necessary to select a suitable sector to be connected and to switch connection to the suitable sector.

As a sector selecting method presently used, there is known a method comprising the steps of comparing reception levels of a plurality of sectors and selecting a particular sector having a greatest reception level. For example, a mobile communication apparatus using CDMA (Code Division Multiple Access) as one of the cellular communication recognizes a plurality of sectors during standby. The mobile communication apparatus is connected to one of the sectors as an active sector (which will hereinafter be referred to as A_SECTOR) and monitors each of the remaining sectors as a monitor sector (which will hereinafter be referred to as M-SECTOR). The mobile communication apparatus compares reception levels Ec/No (the ratio of reception power per chip to power density in the band) of A SECTOR and each M_SECTOR by the use of a parameter given by the network controller. When the reception level of M_SECTOR exceeds the reception level of A_SECTOR (hereinafter referred to as "upon establishment of a sector (or level) switching condition"), a sector switching operation is carried out through the network controller.

However, the above-mentioned method is not suitable if the mobile communication apparatus is used under an environment in which a sector dramatically changed in reception level is present, for example, during driving, in an urban center, and at a busy street densely built up.

This is because, in case where such sector dramatically changed in reception level is present, the sector switching condition is frequently established so that the sector switching operation is frequently carried out. In the sector switching operation, communication for the switching operation occurs between the base station and the mobile communication apparatus. ln view of a reduction of a network load, effective use of a line capacity, and a decrease in power consumption of the mobile communication apparatus, a frequency of the sector switching operation is preferably suppressed as low as possible.

Also, in view of improvement of a data communication rate in a data communication service, the frequency of the sector switching operation is desirably suppressed as low as possible.

As a sector switching method in CDMA, a technique called soft handover is known. In the soft handover, the mobile communication apparatus is connected to a plurality of sectors at an intermediate stage of the sector switching operation so as to continuously keep a state where the mobile communication apparatus is connected to at least one sector. In other words, the sector switching operation can be carried out without interrupting data communication. For example, a dedicated transport channel (DCH) as a transport channel in WCDMA (Wideband CDMA) has a soft handover function.

In WCDMA, however, not all transport channels have the soft handover function. At the transport channels without the soft handover function, data communication is interrupted upon the sector switching operation and started again after completion of the sector switching operation. Therefore, in case where the data communication is carried out by the use of such transport channels, for example, a forward access channel (FACH), a random access channel (RACH), a common packet channel (CPCH), and a downlink shared channel (DSCH), the data communication is interrupted during the sector switching operation. In view of the above, by suppressing the number of times of the sector switching operation during a predetermined time period, the amount of data transmitted and received during the predetermined time period is increased. In other words, the data communication rate is increased.

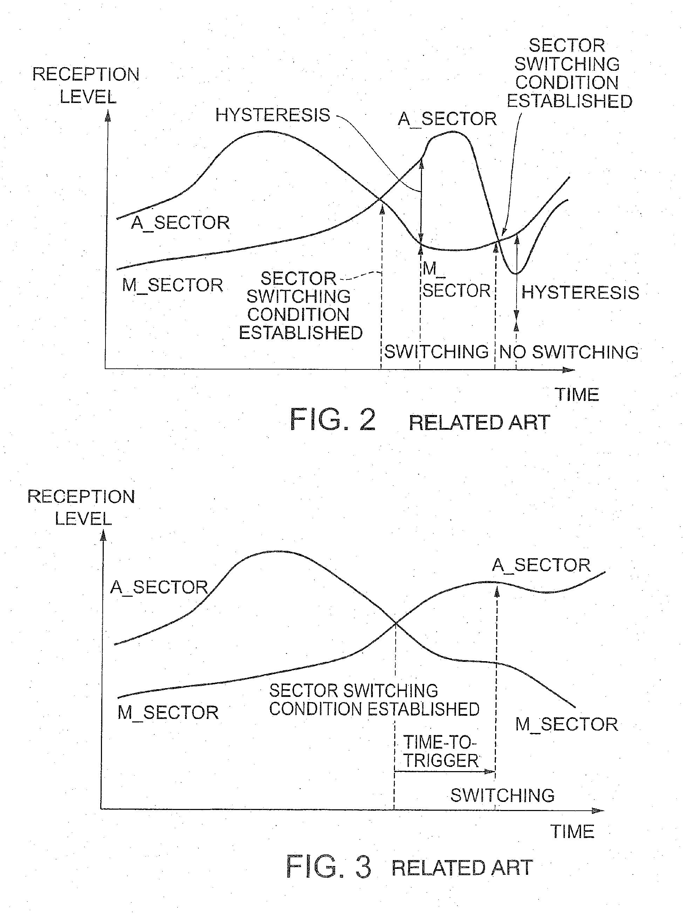

On the other hand, there is known another method in which not only the reception levels of a plurality of sectors are merely compared but also hysteresis of the reception levels and time-to-trigger are taken into consideration. This method is disclosed in 3rd Generation Partnership Project, Technical Specification, 3GPP TS25.331 V3.14.0 (2003-03). Referring to Fig. 2, a technique considering the hysteresis will be described. In the technique considering the hysteresis, the sector switching operation is carried out only if the reception level of M_SECTOR exceeds the reception level of A_SECTOR (upon establishment of the level switching condition) and thereafter a difference between the reception level of M_SECTOR and the reception level of the A_ SECTOR exceeds a predetermined value. Referring to Fig. 3, a technique considering the time-to-trigger will be described. In the technique considering the time-to-trigger, the sector switching operation is carried out after lapse of a predetermined time period from a sector switching timing determined by the establishment of the level switching condition or by further considering the hysteresis. In the above-mentioned method, the frequency of the sector switching operation can be suppressed as compared with the method of merely comparing the reception levels.

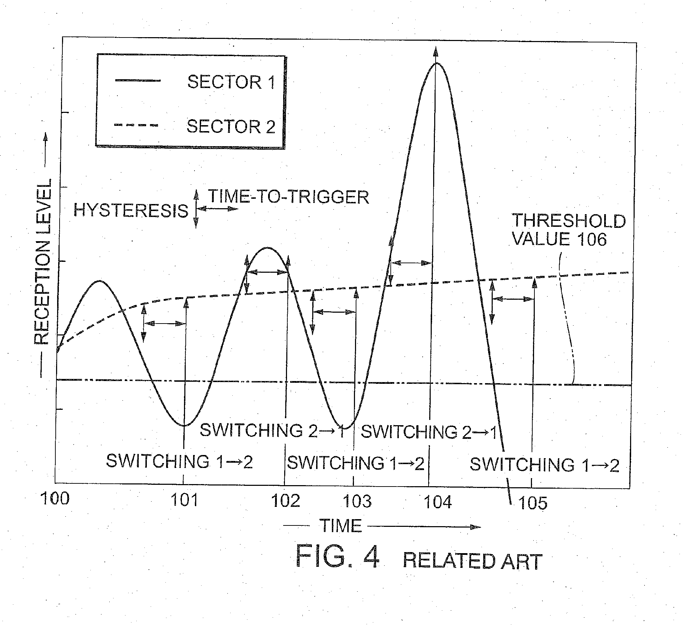

However, even if the hysteresis and the time-to-trigger are used, the frequency of the sector switching operation can not be sufficiency suppressed in case where a sector 1 dramatically changed in reception level and another sector 2 stable in reception level are present as shown in Fig. 4. In Fig. 4, the reception levels of the sector 1 and the sector 2 are depicted by a solid line and a dotted line, respectively.

It is assumed here that the sector 1 is selected at a time instant 100 in Fig. 4. It is also assumed that, if the mobile communication apparatus is connected to a sector having a reception level not lower than a threshold value 106 in Fig. 4, a probability of success of a call originating operation or a call receiving operation is sufficiently high without any problem in practical use. If this method is used, the sector switching operation is carried out at time instants 101, 102, 103, 104, and 105 in Fig. 4 and the sector 2 is finally selected. In this case, however, it is desired to continuously select the sector 2 having a reception level stabilized at a sufficiently high level, although the reception level of the sector 2 is temporarily lowered as compared with the sector 1. This is because selection of the sector 1 by the unnecessary sector switching operations causes a state where the reception level is not sufficiently high (for example, immediately before the time instants 101, 103, and 105). Such state brings about an increase in failure of the call originating operation or the call receiving operation and a decrease in communication quality, such as in increase in call loss.

Further, there is still another method in which the level switching condition is judged by using time averages of the reception levels of a plurality of sectors and further considering the hysteresis, as disclosed in Japanese Patent Application Publication (JP-A) No. H5-41689. In this method, however, it is impossible to sufficiently suppress the frequency of the sector switching operations like the above-mentioned method considering the hysteresis and the time-to-trigger.

Further, in a method disclosed in Japanese Patent Application Publication (JP-A) No. H5-91038, connection with a particular sector is stopped at a time instant when a reception level of the particular sector becomes smaller than a predetermined threshold value and the threshold value is changed by a fluctuation of the reception level of the sector. However, in this method, the threshold value is lowered in case where the fluctuation of the reception level of the sector is large, so as to maintain the connection at a low reception level. Therefore, in this method also, it is impossible to continuously select the sector having a reception level stabilized at a sufficiently high level in such situation illustrated in Fig. 4.

As described above, in the cellular communication, it is important that the mobile communication apparatus maintains connection with a particular sector which can provide stable communication and assure a high reception quality in any state, i.e., during standby, during call origination, during call reception, and during communication. Following movement, it is necessary to select a suitable sector to be connected and to switch connection to the suitable sector.

However, in the sector switching operation, communication for the switching operation occurs between the base station and the mobile communication apparatus. In view of a reduction of a network load, effective use of a line capacity, and a decrease in power consumption of the mobile communication apparatus, the frequency of the sector switching operation is preferably suppressed as low as possible.

In view of improvement in communication rate of data communication using a channel in which the sector switching operation by soft handover is not carried out, for example, a forward access channel (FACH), a random access channel (RACH), a common packet channel (CPCH), and a downlink shared channel (DSCH) in WCDMA, it is desired to suppress the frequency of the sector switching operation as low as possible.

Further, in view of prevention of a decrease in communication quality such as increase in call loss, it is desired to continuously select a stable sector without selecting an unstable sector exhibiting a dramatic change, such as temporary elevation, in reception level.

In the conventional methods of judging the sector switching operation, unnecessary sector switching operations are frequently carried out in a situation where a sector dramatically changed in reception level is present, for example, during driving, in an urban center, and at a busy street densely built up.

### Summary of the Invention:

It is an object of this invention to provide a communication apparatus which is capable of suppressing a frequency of a sector switching operation and continuously selecting a suitable sector more stable in signal level in a situation where some of the sectors are dramatically changed in reception level.

It is another object of this invention to provide a communication system which includes the above-mentioned communication apparatus.

It is still another object of this invention to provide a sector selecting method for the above-mentioned communication apparatus.

According to this invention, there is provided a communication apparatus for communicating with a plurality of base stations in an area covered by a plurality of sectors corresponding to the base stations, respectively, the communication apparatus comprising receiving means for receiving signals from the sectors, calculating means for calculating a plurality of kinds of variation patterns for each of the signals from the sectors, respectively, and selecting means for selecting, as a selected sector, a particular sector suitable for connection with reference to a relationship among the sectors in variation patterns.

According to this invention, there is also provided a communication apparatus for communicating with a plurality of base stations in an area covered by a plurality of sectors corresponding to the base stations, respectively, the communication apparatus comprising receiving means for receiving signals from the sectors, first detecting means for detecting reversal of a relationship between reception levels of the signals from the first and the second sectors in the sectors, second detecting means for detecting that a difference between the reception levels of the first and the second sectors becomes greater than a predetermined value, calculating means for calculating a plurality of kinds of variation patterns for each of the signals from the first and the second sectors, notifying means activated in response to at least one of a detection result of the first detecting means and a detection result of the second detecting means for notifying lapse of a predetermined time period, and selecting means for selecting, as a selected sector, a particular sector suitable for connection with reference to a relationship between the first and the second sectors in variation patterns when the notifying means notifies the lapse of the predetermined time period.

According to this invention, there is also provided a communication apparatus for communicating with a plurality of base stations in an area covered by a plurality of sectors corresponding to the base stations, respectively, the communication apparatus comprising receiving means for receiving signals from the sectors, calculating means for calculating a variation amount over a predetermined time range for each of the signals from the sectors, and selecting means for selecting, as a selected sector, a particular sector suitable for connection with reference to a relationship among the sectors in the variation amount.

According to this invention, there is also provided a communication apparatus for communicating with a plurality of base stations in an area covered by a plurality of sectors corresponding to the base stations, respectively, the communication apparatus comprising receiving means for receiving signals from the sectors, first detecting means for detecting reversal of a relationship between reception levels of the signals from the first and the second sectors in the sectors, second detecting means for detecting that a difference between the reception levels of the first and the second sectors becomes greater than a predetermined value, calculating means for calculating a variation amount over a predetermined time range for each of the signals from the first and the second sectors, notifying means activated in response to at least one of a detection result of the first detecting means and a detection result of the second detecting means for notifying lapse of a predetermined time period, and selecting means for selecting, as a selected sector, a particular sector suitable for connection with reference to a relationship between the first and the second sectors in the variation amount when the notifying means notifies the lapse of the predetermined time period.

According to this invention, there is also provided a communication apparatus for communicating with a plurality of base stations in an area covered by a plurality of sectors corresponding to the base stations, respectively, the communication apparatus comprising receiving means for receiving signals from the sectors, calculating means for calculating a variation direction over a predetermined time range for each of the signals from the sectors, and selecting means for selecting, as a selected sector, a particular sector suitable for connection with reference to a relationship among the sectors in the variation direction.

According to this invention, there is also provided a communication apparatus for communicating with a plurality of base stations in an area covered by a plurality of sectors corresponding to the base stations, respectively, the communication apparatus comprising receiving means for receiving signals from the sectors, first detecting means for detecting reversal of a relationship between reception levels of the signals from the first and the second sectors in the sectors, second detecting means for detecting that a difference between the reception levels of the first and the second sectors becomes greater than a predetermined value, calculating means for calculating a variation direction over a predetermined time range for each of the signals from the first and the second sectors, notifying means activated in response to at least one of a detection result of the first detecting means and a detection result of the second detecting means for notifying lapse of a predetermined time period, and selecting means for selecting, as a selected sector, a particular sector suitable for connection with reference to a relationship between the first and the second sectors in the variation direction when the notifying means notifies the lapse of the predetermined time period.

According to this invention, there is also provided a communication apparatus for communicating with a plurality of base stations by CDMA in an area covered by a plurality of sectors corresponding to the base stations, respectively, the communication apparatus comprising receiving means for receiving common pilot channels of the sectors, calculating means for calculating at least one of an average over a predetermined time range, a variation amount over the predetermined time range, and a variation direction over the predetermined time range with respect to each of the common pilot channels of the sectors, and selecting means for selecting, in a state where the communication apparatus is connected to only one of the sectors, a particular sector suitable for connection with reference to a relationship among the sectors in at least one of the average, the variation amount, and the variation direction.

According to this invention, there is also provided a communication system including a plurality of base stations, a communication apparatus for communicating with the base stations in an area covered by a plurality of sectors corresponding to the base stations, respectively, and switching means for switching a connected sector connected to the communication apparatus following movement of the communication apparatus, the communication apparatus comprising receiving means for receiving signals from the sectors, calculating means for calculating a plurality of kinds of variation patterns for each of the signals from the sectors, respectively, and selecting means for selecting, as a selected sector, a particular sector suitable for connection with reference to a relationship among the sectors in variation patterns.

According to this invention, there is also provided a communication system including a plurality of base stations, a communication apparatus for communicating with the base stations in an area covered by a plurality of sectors corresponding to the base stations, respectively, and switching means for switching a connected sector connected to the communication apparatus following movement of the communication apparatus, the communication apparatus comprising receiving means for receiving signals from the sectors, first detecting means for detecting reversal of a relationship, between reception levels of the signals from the first and the second sectors in the sectors, second detecting means for detecting that a difference between the reception levels of the first and the second sectors becomes greater than a predetermined value, calculating means for calculating a plurality of kinds of variation patterns for each of the signals from the first and the second sectors, notifying means activated in response to at least one of a detection result of the first detecting means and a detection result of the second detecting means for notifying lapse of a predetermined time period, and selecting means for selecting, as a selected sector, a particular sector suitable for connection with reference to a relationship between the first and the second sectors in variation patterns when the notifying means notifies the lapse of the predetermined time period.

According to this invention, there is also provided a communication system including a plurality of base stations, a communication apparatus for communicating with the base stations in an area covered by a plurality of sectors corresponding to the base stations, respectively, and switching means for switching a connected sector connected to the communication apparatus following movement of the communication apparatus, the communication apparatus comprising receiving means for receiving signals from the sectors, calculating means for calculating a variation amount over a predetermined time range for each of the signals from the sectors, and selecting means for selecting, as a selected sector, a particular sector suitable for connection with reference to a relationship among the sectors in the variation amount.

According to this invention, there is also provided a communication system including a plurality of base stations, a communication apparatus for communicating with the base stations in an area covered by a plurality of sectors corresponding to the base stations, respectively, and switching means for switching a connected sector connected to the communication apparatus following movement of the communication apparatus, the communication apparatus comprising receiving means for receiving signals from the sectors, first detecting means for detecting reversal of a relationship between reception levels of the signals from the first and the second sectors in the sectors, second detecting means for detecting that a difference between the reception levels of the first and the second sectors becomes greater than a predetermined value, calculating means for calculating a variation amount over a predetermined time range for each of the signals from the first and the second sectors, notifying means activated in response to at least one of a detection result of the first detecting means and a detection result of the second detecting means for notifying lapse of a predetermined time period, and selecting means for selecting, as a selected sector, a particular sector suitable for connection with reference to a relationship between the first and the second sectors in the variation amount when the notifying means notifies the lapse of the predetermined time period.

According to this invention, there is also provided a communication system including a plurality of base stations, a communication apparatus for communicating with the base stations in an area covered by a plurality of sectors corresponding to the base-stations, respectively, and switching means for switching a connected sector connected to the communication apparatus following movement of the communication apparatus, the communication apparatus comprising receiving means for receiving signals from the sectors, calculating means for calculating a variation direction over a predetermined time range for each of the signals from the sectors, and selecting means for selecting, as a selected sector, a particular sector suitable for connection with reference to a relationship among the sectors in the variation direction.

According to this invention, there is provided a communication system including a plurality of base stations, a communication apparatus for communicating with the base stations in an area covered by a plurality of sectors corresponding to the base stations, respectively, and switching means for switching a connected sector connected to the communication apparatus following movement of the communication apparatus, the communication apparatus comprising receiving means for receiving signals from the sectors, first detecting means for detecting reversal of a relationship between reception levels of the signals from the first and the second sectors in the sectors, second detecting means for detecting that a difference between the reception levels of the first and the second sectors becomes greater than a predetermined value, calculating means for calculating a variation direction over a predetermined time range for each of the signals from the first and the second sectors, notifying means activated in response to at least one of a detection result of the first detecting means and a detection result of the second detecting means for notifying lapse of a predetermined time period, and selecting means for selecting, as a selected sector, a particular sector suitable for connection with reference to a relationship between the first and the second sectors in the variation direction when the notifying means notifies the lapse of the predetermined time period.

According to this invention, there is also provided a communication system including a plurality of base stations, a communication apparatus for communicating with the base stations in an area covered by a plurality of sectors corresponding to the base stations, respectively, and switching means for switching a connected sector connected to the communication apparatus following movement of the communication apparatus, the communication apparatus comprising receiving means for receiving common pilot channels of the sectors, calculating means for calculating at least one of an average over a predetermined time range, a variation amount over the predetermined time range, and a variation direction over the predetermined time range with respect to each of the common pilot channels of the sectors, and selecting means for selecting, in a state where the communication apparatus is connected to only one of the sectors, a particular sector suitable for connection with reference to a relationship among the sectors in at least one of the average, the variation amount, and the variation direction.

According to this invention, there is also provided a sector selecting method for a communication apparatus for communicating with a plurality of base stations in an area covered by a plurality of sectors corresponding to the base stations, respectively, the method comprising a receiving step of receiving signals from the sectors, a calculating step of calculating a plurality of kinds of variation patterns for each of the signals from the sectors, respectively, and a selecting step of selecting, as a selected sector, a particular sector suitable for connection with reference to a relationship among the sectors in variation patterns.

According to this invention, there is also provided a sector selecting method for a communication apparatus for communicating with a plurality of base stations in an area covered by a plurality of sectors corresponding to the base stations, respectively, the method comprising a receiving step of receiving signals from the sectors, a first detecting step of detecting reversal of a relationship between reception levels of the signals from the first and the second sectors in the sectors, a second detecting step of detecting that a difference between the reception levels of the first and the second sectors becomes greater than a predetermined value, a calculating step of calculating a plurality of kinds of variation patterns for each of the signals from the first and the second sectors, a notifying step of notifying lapse of a predetermined time period, the notifying step being activated in response to at least one of a detection result of the first detecting step and a detection result of the second detecting step, and a selecting step of selecting, as a selected sector, a particular sector suitable for connection with reference to a relationship between the first and the second sectors in variation patterns when the lapse of the predetermined time period is notified in the notifying step.

According to this invention, there is also provided a sector selecting method for a communication apparatus for communicating with a plurality of base stations in an area covered by a plurality of sectors corresponding to the base stations, respectively, the method comprising a receiving step of receiving signals from the sectors, a calculating step of calculating a variation amount over a predetermined time range for each of the signals from the sectors, and a selecting step of selecting, as a selected sector, a particular sector suitable for connection with reference to a relationship among the sectors in the variation amount.

According to this invention, there is also provided a sector selecting method for a communication apparatus for communicating with a plurality of base stations in an area covered by a plurality of sectors corresponding to the base stations, respectively, the method comprising a receiving step of receiving signals from the sectors, a first detecting step of detecting reversal of a relationship between reception levels of the signals from the first and the second sectors in the sectors, a second detecting step of detecting that a difference between the reception levels of the first and the second sectors becomes greater than a predetermined value, a calculating step of calculating a variation amount over a predetermined time range for each of the signals from the first and the second sectors, a notifying step of notifying lapse of a predetermined time period, the notifying step being activated in response to at least one of a detection result of the first detecting step and a detection result of the second detecting step, and a selecting step of selecting, as a selected sector, a particular sector suitable for connection with reference to a relationship between the first and the second sectors in the variation amount when the lapse of the predetermined time period is notified in the notifying step.

According to this invention, there is also provided a sector selecting method for a communication apparatus for communicating with a plurality of base stations in an area covered by a plurality of sectors corresponding to the base stations, respectively, the method comprising a receiving step of receiving signals from the sectors, a calculating step of calculating a variation direction over a predetermined time range for each of the signals from the sectors, and a selecting step of selecting, as a selected sector, a particular sector suitable for connection with reference to a relationship among the sectors in the variation direction.

According to this invention, there is also provided a sector selecting method for a communication apparatus for communicating with a plurality of base stations in an area covered by a plurality of sectors corresponding to the base stations, respectively, the method comprising a receiving step of receiving signals from the sectors, a first detecting step of detecting reversal of a relationship between reception levels of the signals from the first and the second sectors in the sectors, a second detecting step of detecting that a difference between the reception levels of the first and the second sectors becomes greater than a predetermined value, a calculating step of calculating a variation direction over a predetermined time range for each of the signals from the first and the second sectors, a notifying step of notifying lapse of a predetermined time period, the notifying step being activated in response to at least one of a detection result of the first detecting step and a detection result of the second detecting step, and a selecting step of selecting, as a selected sector, a particular sector suitable for connection with reference to a relationship between the first and the second sectors in the variation direction when the lapse of the predetermined time period is notified in the notifying step.

According to this invention, there is also provided a sector selecting method for a communication apparatus for communicating with a plurality of base stations by CDMA in an area covered by a plurality of sectors corresponding to the base stations, respectively, the method comprising a receiving step of receiving common pilot channels of the sectors, a calculating step of calculating at least one of an average over a predetermined time range, a variation amount over the predetermined time range, and a variation direction over the predetermined time range with respect to each of the common pilot channels of the sectors, and a selecting step of selecting, in a state where the communication apparatus is connected to only one of the sectors, a particular sector suitable for connection with reference to a relationship among the sectors in at least one of the average, the variation amount, and the variation direction.

In this invention, a communication apparatus for communicating with a plurality of base stations in an area covered by a plurality of sectors corresponding to the base stations, respectively, comprises receiving means for receiving signals from the sectors and calculating means for calculating a plurality of kinds of variation patterns for each of the signals from the sectors. One of the sectors as a suitable sector for connection is selected depending upon a relationship among the sectors with respect to the variation patterns calculated by the calculating means. As the variation patterns of the signals, calculation is made of, for example, average values, variation amounts, and variation directions of the reception levels. Based on the relationship among the variation patterns, the suitable sector is selected. Therefore, as compared with the case where selection is based only upon comparison of the reception levels, this invention has an effect that the frequency of the sector switching operation is suppressed and the suitable sector more stable in reception level is continuously selected. Further, by considering a plurality of kinds of variation patterns, the effect is improved.

As a result, it is possible to provide a communication apparatus, a communication system, and a sector selecting method for a communication apparatus, which are capable of suppressing a frequency of a sector switching operation and continuously selecting a suitable sector more stable in signal level.

### Brief Description of the Drawing:

Fig. 1 is a view for describing a structure of a typical cellular communication system;
Fig. 2 is a view for describing a conventional technique using hysteresis;
Fig. 3 is a view for describing another conventional technique using time-to-trigger;
Fig. 4 is a view for describing a conventional sector selecting method;
Fig.5 is a view for describing a structure of a cellular communication apparatus according to an embodiment of this invention;
Fig. 6 is a flow chart for describing an operation of the cellular communication apparatus illustrated in Fig. 5;
Fig. 7 is a view showing a relationship between a sector switching operation and time changes in reception level and in average in the embodiment of this invention;
Fig. 8 is a view showing time change in variation amount of the reception level in the embodiment of this invention;
Fig. 9 is a view showing time change in variation direction of the reception level in the embodiment of this invention; and
Fig. 10 is a table showing various combinations of signal variation patterns and sector selection criteria applicable in the embodiment of this invention.

### Description of the Preferred Embodiment:

Now, description will be made of an embodiment of this invention with reference to the drawing. However, a technical scope of this invention is not restricted by the embodiment.

Referring again to Fig. 1, a typical communication system to which this invention is applicable will be described. However, Fig. 1 shows only essential components required for description of the embodiment of this invention. A communication system of this embodiment is generally same in structure as the typical communication system except several characteristics specific to this invention. The communication system according to the embodiment of this invention is a CDMA radio access network system which includes a communication apparatus 70 used by a user, a plurality of base stations (1, 2, ..., n) to be connected to the communication apparatus 70, and a network controller 71 connected to the base stations (1, 2, ..., n). Each of the base stations (1, 2, ..., n) has a radio zone or cell for communication with the communication apparatus 70. A service area of the communication system is covered by a plurality of the cells. Each cell comprises a plurality of sectors corresponding to a plurality of directional antennas of the base station. The communication apparatus 70 is connected to a suitable one of the directional antennas, i.e., a suitable one of the sectors depending upon a position of the communication apparatus 70. Thus, mobile communication can be carried out. With reference to a report transmitted from the communication apparatus 70 through the base stations (1, 2, ..., n), the network controller 71 selects one of the sectors as a selected sector suitable for connection with the communication apparatus 70 and switching over to the selected sector is carried out.

In this embodiment, each cell comprises three sectors. However, the number of the sectors constituting each cell is not restricted to three. Further, the number of sectors constituting each cell is not restricted to a plural number but may be a unity. In other words, the cells and the sectors may be in one-to-one correspondence to each other.

In this embodiment, switching over to the selected sector suitable for connection is carried out immediately. However, switching need not necessarily be carried out immediately. For example, the selected sector suitable for connection may be treated as one of candidate sectors to be connected to the communication apparatus 70. Upon switching, a sector of a particular cell may be switched to a different sector of a different cell or may be switched to a different sector of the same cell.

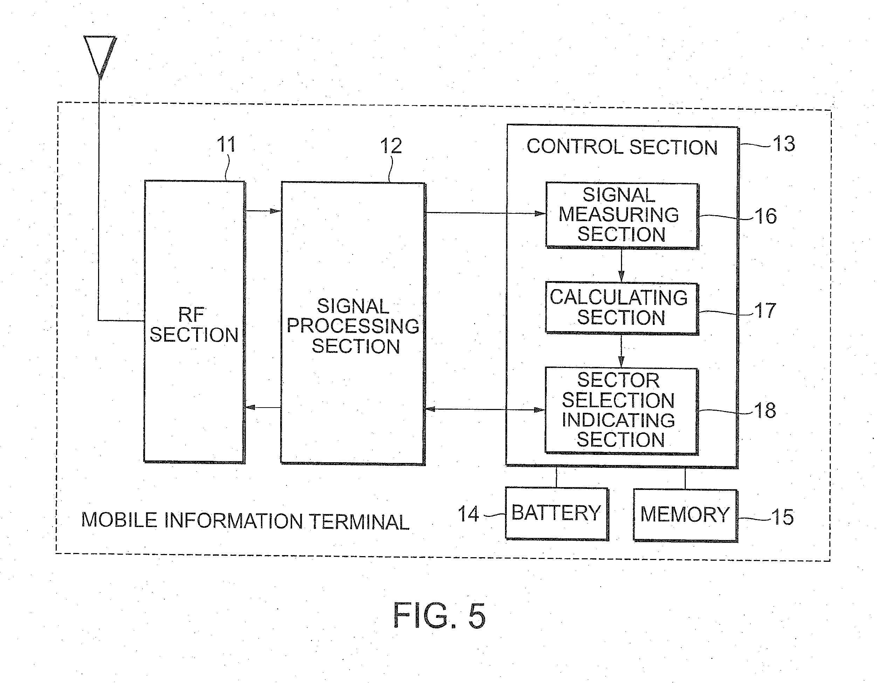

Referring to Fig. 5, the communication apparatus used in the communication system of this embodiment will be described. In the figure, only components required to describe the embodiment of this invention are shown. The communication apparatus of this embodiment is a mobile information terminal for transmitting and receiving a speech signal and a data signal in CDMA. The mobile information terminal comprises an RF section 11, a signal processing section 12, a control section 13, a battery 14, and a memory 15. In the mobile information terminal, the RF section 11 down-converts a frequency of a reception signal and A/D converts the reception signal. Further, the RF section 11 D/A converts a transmission signal and up-converts a frequency of the transmission signal. The signal processing section 12 despreads and decodes the reception signal supplied from the RF section 11 and encodes and spreads the transmission signal supplied from the RF section 11. The control section 13 controls a decoded signal or an encoded signal from the signal processing section 12 and controls an operation of the communication apparatus (mobile information terminal).

The control section 13 comprises a signal measuring section 16, a calculating section 17, and a sector selection indicating section 18. In the control section 13, the signal measuring section 16 measures reception levels (Ec/No: the ratio of reception power per chip to power density in the band) of signals of the sectors. The calculating section 17 compares the reception levels measured by the signal measuring section 16 and calculates signal variation patterns. With reference to the signal variation patterns calculated by the calculating section 17, the sector selection indicating section 18 indicates a particular sector to be connected.

In this embodiment, a primary common pilot channel (Primary CPICH) is used as the signal of the sector. Herein, the Primary CPICH is only one channel for each sector and is scrambled by a primary scrambling code specific to each sector. It is assumed here that the communication apparatus (mobile information terminal) is connected to a single sector and carries out data communication.

In this embodiment, the reception level is used as a parameter measured by the signal measuring section 16. However, use may be made of a different parameter representative of a state of the signal of the sector . For example, a signal-to-interference ratio (SIR) may be used.

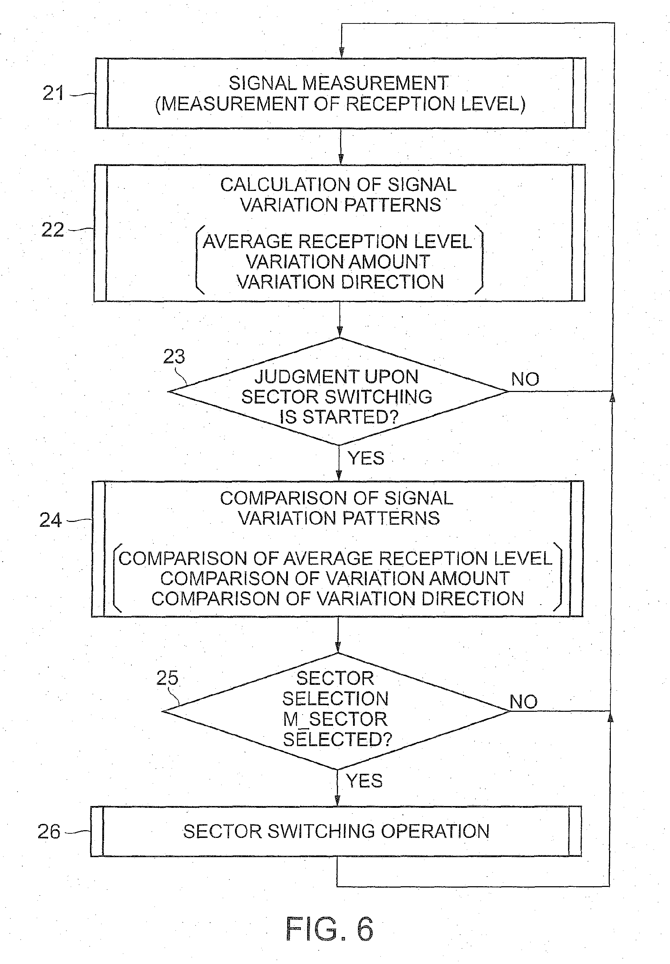

Referring to Fig. 6, an operation of the control section 13 of the mobile information terminal will be described. The signal measuring section 16 measures the reception levels of the sectors at a predetermined time interval (step 21). The calculating section 17 calculates the signal variation patterns of the sectors with reference to measurement results of the reception levels every time when the reception levels are measured in the step 21 (step 22).

In this embodiment, an average reception level (hereinafter simply be referred to as an average), a variation amount of the reception level (hereinafter simply be referred to as a variation amount), and a variation direction of the reception level (hereinafter simply be referred to as a variation direction) are adopted as the signal variation patterns.

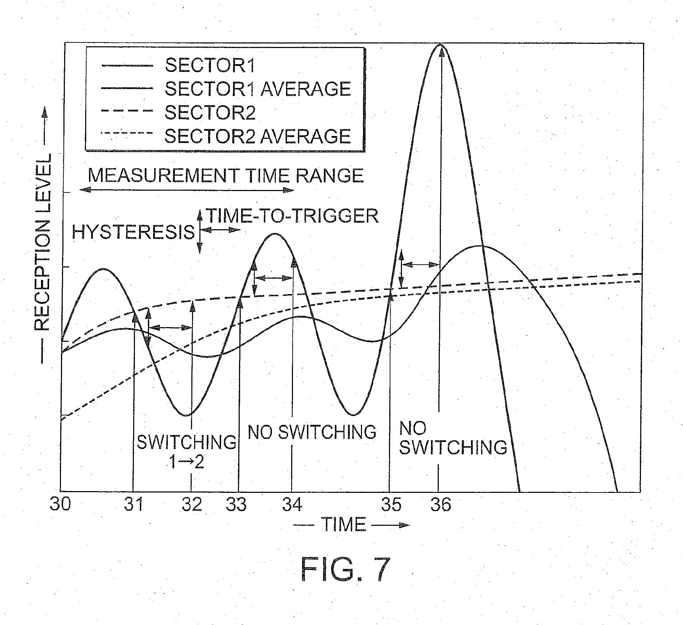

The average is a moving average of the reception level over a predetermined time range. Fig. 7 shows an example of time change of each of the reception level and the average with respect to each of the sectors. For example, attention will be directed to the sector 1. As compared with the change in reception level (thick solid line), the change in average (thin solid line) is small and is delayed.

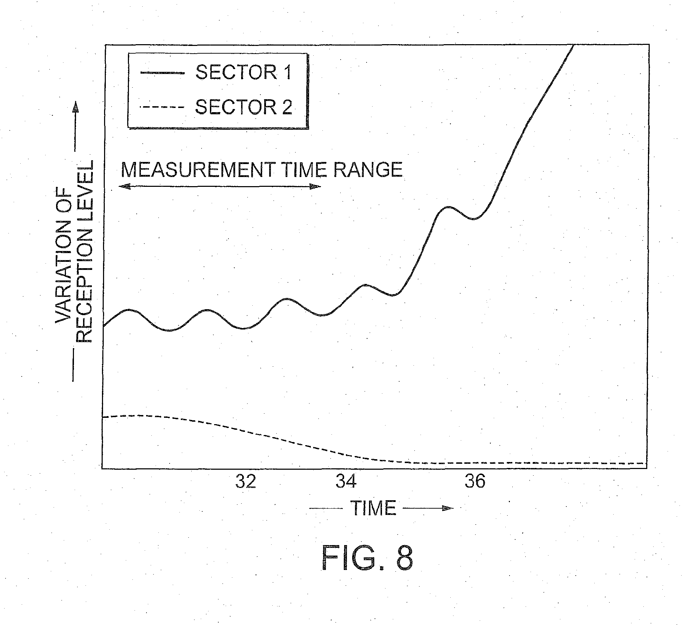

The variation amount is obtained by calculating a difference between a current measured value and a previous measured value of the reception level and summing up absolute values of the differences over the predetermined time range. Fig. 8 shows time change in variation amount corresponding to the time change in reception level in Fig. 7. For example, attention will be directed to the sector 1. As the reception level (thick solid line) in Fig. 7 is increased in amplitude from a time instant 34 towards a time instant 36, the variation amount (thick solid line) in Fig. 8 is increased.

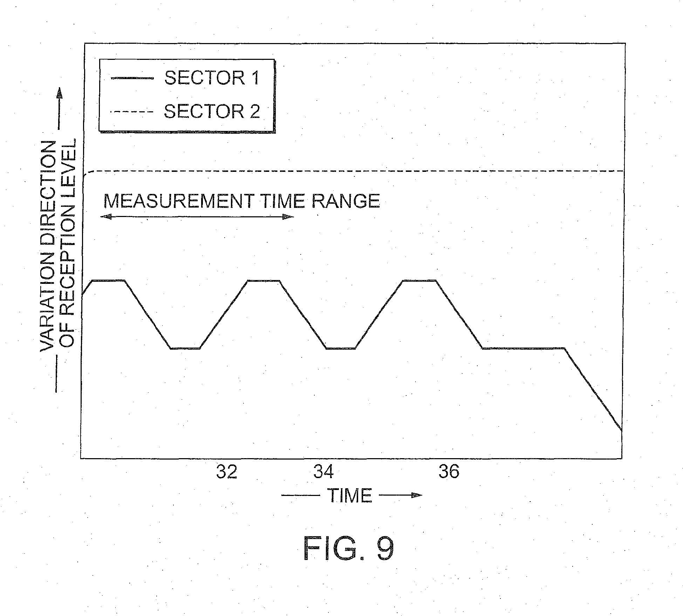

The variation direction is obtained as a count of the number of times the current measured value of the reception level is greater than the previous measured value, i.e., the number of times the reception level is changed in an increasing direction over the predetermined time range. Fig. 9 shows time change in variation direction corresponding to the time change in reception level in Fig. 7. For example, attention is directed to the sector 1. As the reception level (thick solid line) in Fig. 7 is repeatedly increased and decreased, the variation direction (solid line) in Fig. 9 is repeatedly increased and decreased also. The variation direction (dotted line) of the sector 2 in Fig. 9 is constant. This means that the reception level (thick dotted line) in Fig. 7 is monotonously increased.

In this embodiment, the signal variation patterns are calculated every time when the reception levels are measured in the step 21. However, the signal variation patterns need not necessarily be calculated every time when the reception levels are measured, but may be calculated at a predetermined time interval.

In this embodiment, the averages, the variation amounts, and the variation directions are calculated over the same time range. However, calculation need not necessarily be carried out over the same time range but different time ranges may individually be selected for the respective signal variation patterns.

Turning back to Fig. 6, the calculating section 17 determines whether or not judgement upon the sector switching operation is started considering the signal variation patterns calculated in the step 22 (step 23). Determination is carried out under the following condition. Specifically, if the reception level of a monitor sector (hereinafter will be referred to as M_SECTOR) which is not connected but monitored becomes greater than the reception level of an active sector (hereinafter will be referred to as A_SECTOR) which is currently connected (upon establishment of a level switching condition) and if the conditions of hysteresis and time-to-trigger described in conjunction with the prior art are satisfied, the step 23 proceeds to a step 24 (which will later be described) to start the judgment upon the sector switching operation. Otherwise, the step 23 returns to the step 21 to start measurement of the reception levels again.

In this embodiment, the above-mentioned condition is applied to the determination in the step 23. However, the condition may be modified in various manners. For example, use may be made of (1) the level switching condition alone (only if the reception level of M_SECTOR becomes greater than the reception level of A_SECTOR), (2) the hysteresis alone (only if a difference between the reception level of M_SECTOR and the reception level of A_ SECTOR becomes greater than a predetermined value), (3) a combination of the level switching condition and the hysteresis (if the reception level of M_ SECTOR becomes greater than the reception level of A_SECTOR and thereafter the difference between the reception level of M_SECTOR and the reception level of A_SECTOR becomes greater than the predetermined value), or (4) a combination of the level switching condition and the time-to-trigger (if the reception level of M_SECTOR becomes greater than the reception level of A_ SECTOR and thereafter a predetermined time has lapsed). Alternatively, the step 22 may proceed to the step 24 unconditionally

The sector selection indicating section 18 compares the signal variation patterns of the sectors (step 24) and selects, as a selected sector, a particular sector suitable for connection with reference to a sector selection criterion as follows (step 25). Specifically, comparison is made between the signal variation patterns of A_SECTOR and M_SECTOR for which the level switching condition is established in the step 23. Then, one of the sectors which is superior in two or more of the three kinds of the signal variation patterns, i.e., the average, the variation amount, and the variation direction is selected. To be superior in average means a greater value of the average. To be superior in variation amount means a smaller value of the variation amount. To be superior in variation direction means a greater value of the variation direction, i.e., a longer period of the increasing direction.

If M_SECTOR is selected as a result of the above-mentioned comparison, the operation proceeds to a step 26 which will later be described. On the other hand, if A_SECTOR is selected, A_SECTOR is continuously connected without carrying out the sector switching operation and the operation returns to the step 21 to start measurement of the reception levels again.

Further, the sector selection indicating section 18 informs the result of judgment upon the sector switching operation through the base station to the network controller and the sector switching operation is carried out in response to the instruction transmitted from the network controller through the base station to the mobile information apparatus or the communication apparatus (step 26).

In this embodiment, switching over to the selected sector suitable for connection is carried out immediately. However, switching need not necessarily be carried out immediately. For example, the selected sector suitable for connection may be treated as one of candidate sectors to be connected to the mobile information apparatus or the communication apparatus.

Referring to Figs. 7, 8, and 9, the sector switching operation in this embodiment will be described in detail.

Fig. 7 shows the time change in reception level and in average with respect to each of the sectors whose reception levels are monitored by the mobile information terminal, together with the relationship between the two sectors in reception level and in average. Like Fig. 4 described in conjunction with the prior art, there are a sector 1 (reception level: thick solid line, average: thin solid line) dramatically changed in reception level and a sector 2 (reception level: thick dotted line, average: thin dotted line) stable in reception level. At a time instant 30 in Fig. 7, the sector 1 is a connected sector or A_SECTORwhile the sector 2 is a monitored sector or M_SECTOR.

Fig. 8 shows time change in variation amount with respect to each of the sectors whose reception levels are monitored, together with the relationship in variation amount between the two sectors. Fig. 9 shows time change in variation direction of each of the sectors whose reception levels are monitored, together with the relationship in variation direction between the two sectors.

At a time instant 31 in Fig. 7, the reception level of the sector 2 (M_ SECTOR) becomes greater than the reception level of the sector 1 (A_ SECTOR) and the level switching condition is established. At a time instant 32, the hysteresis and the time-to-trigger conditions are established and the judgment upon the sector switching operation is started in the step 23 in Fig. 6. Referring to Figs. 7, 8, and 9, the sector 2 (M_SECTOR) is superior than the sector 1 (A_SECTOR) at the time instant 32 in all of the average, the variation amount, and the variation direction. That is, in Fig. 7, the average (thin dotted line) of the sector 2 is greater than the average (thin solid line) of the sector 1. In Fig. 8, the variation amount (dotted line) of the sector 2 is smaller than the variation amount (solid line) of the sector 1.In Fig. 9, the variation direction (dotted line) of the sector 2 is greater than the variation direction (solid line) of the sector 1. Therefore, the sector 2 (M_SECTOR) is selected in the step 25 in Fig. 6 and the connected sector or A_SECTOR is switched from the sector 1 to the sector 2 in the step 26 in Fig. 6. Now, the sector 1 is the M_SECTOR while the sector 2 is the A_SECTOR.

At a time instant 33 in Fig. 7, the reception level of the sector 1 (M_ SECTOR) becomes greater than the reception level of the sector 2 (A_ SECTOR) and the level switching condition is established again. At a time instant 34, the hysteresis and the time-to-trigger conditions are established and the judgment upon the sector switching operation is started in the step 23 in Fig. 6. Referring to Figs. 7, 8, and 9, however, the sector 2 (A_SECTOR) is still superior than the sector 1 (M_SECTOR) at the time instant 34 in all of the average, the variation amount, and the variation direction. That is, in Fig. 7, the average (thin dotted line) of the sector 2 is greater than the average (thin solid line) of the sector 1. In Fig. 8, the variation amount (dotted line) of the sector 2 is smaller than the variation amount (solid line) of the sector 1. In Fig. 9, the variation direction (dotted line) of the sector 2 is greater than the variation direction (solid line) of the sector 1. Therefore, the sector 2 (A_SECTOR) is selected in the step 25 in Fig. 6 and the sector switching operation is not carried out.

At the time instant 35 in Fig. 7, the reception level of the sector 1 (M_ SECTOR) becomes greater than the reception level of the sector 2 (A_ SECTOR). Therefore, the level switching condition is established third time. Further, at the time instant 36, the hysteresis and the time-to-trigger conditions are established and the judgment upon the sector switching operation is started in the step 23 in Fig. 6. Referring to Figs. 7, 8, and 9, however, at the time instant 36, the sector 1 (M_SECTOR) is superior in average than the sector 2 (A_ SECTOR) but the sector 2 (A_SECTOR) is still superior than the sector 1 (M_ SECTOR) in other two parameters of the variation amount and the variation direction. That is, in Fig. 7, the average (thin dotted line) of the sector 2 is smaller than the average (thin solid line) of the sector 1. In Fig. 8, the variation amount (dotted line) of the sector 2 is smaller than the variation amount (solid line) of the sector 1. In Fig. 9, the variation direction (dotted line) of the sector 2 is greater than the variation direction (solid line) of the sector 1. Therefore, the sector 2 (A_SECTOR) is selected in the step 25 in Fig. 6 and the sector switching operation is not carried out.

Thus, in a time zone shown in Fig. 7, the mobile information terminal of this embodiment is continuously connected to the sector 2 stable in reception level after the switching from the sector 1 to the sector 2 is carried out at the time instant 32. On the other hand, in the prior art illustrated in Fig. 4, the sector switching operation is carried out at every reversal of the relationship between the reception levels of the sector 1 and the sector 2. As compared with the prior art shown in Fig. 4, the mobile information terminal of this embodiment can be continuously connected to the sector stable in reception level and the frequency of the sector switching operation is considerably suppressed.

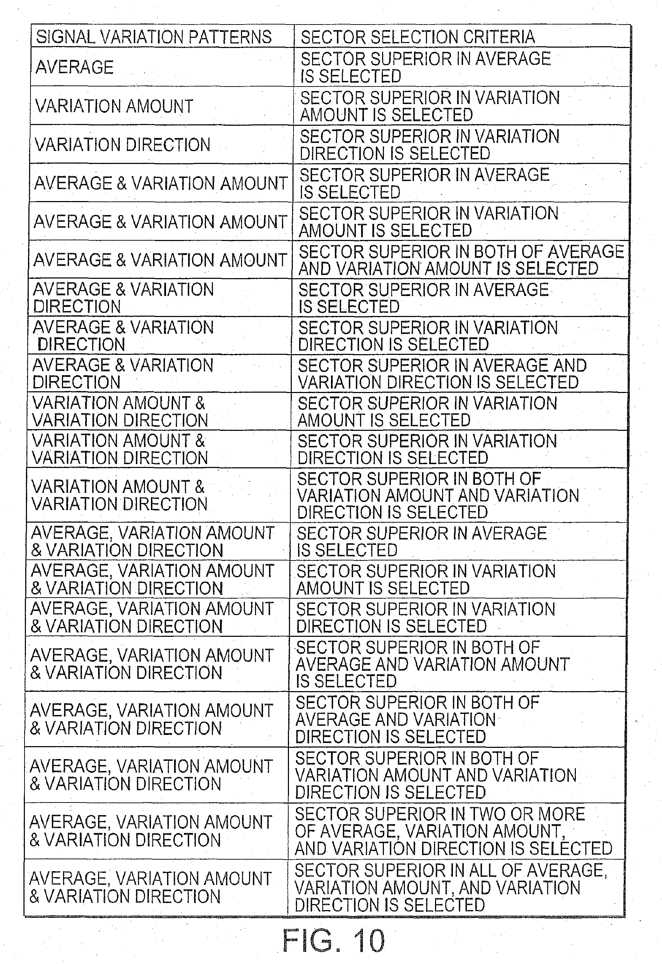

In this embodiment, the average, the variation amount, and the variation direction are calculated as the signal variation patterns in the step 22. In the step 25, as the sector selection criterion, a sector superior in two or more of the three kinds of the signal variation patterns is selected. However, a combination of the signal variation patterns calculated in the step 22 and the sector selection criterion in the step 25 is not restricted to that described in this embodiment. Depending upon the environment and the communication condition, any one of combinations shown in Fig. 10 may be selected.

The predetermined time range over which the signal variation patterns are calculated may be variable. For example, the time range for calculation of the signal variation patterns may be changed depending upon the moving speed of the mobile communication apparatus (mobile information terminal). If the moving speed is high and low, the time range may be shortened and lengthened, respectively. In order to measure the moving speed, the mobile communication apparatus (mobile information terminal) may utilize the relationship between a variation cycle of the reception signal level and a moving distance.

As described above, with the communication apparatus, the communication system, and the sector selecting method for the communication apparatus, it is possible to suppress the frequency of unnecessary switching operations even in an environment where a sector dramatically changed in reception level is present, for example, during driving, in an urban center, and at a busy street densely built up and to continuously select a sector stable in reception level without selecting a sector exhibiting a dramatic change in reception level, such as a temporary increase in reception level.

By suppressing the unnecessary sector switching operation, it is possible to reduce a network load, to effectively utilize a line capacity, and to reduce power consumption of the communication apparatus. In particular, by reducing the power consumption, it is possible to extend a possible standby time (during which an idle state can be continued) of the communication apparatus.
in data communication using a channel in which the sector switching operation by soft handover is not carried out, for example, a forward access channel (FACH), a random access channel (RACH), a common packet channel (CPCH), and a downlink shared channel (DSCH), the time of interruption of the data communication is shortened and, as a result, the data communication rate can be improved.

Further, by continuously selecting the sector stable in reception level, it is possible to prevent a decrease in communication quality, such as increase in call loss.

While this invention has thus far been described in conjunction with the preferred embodiment thereof, it will be readily possible for those skilled in the art to put this invention into practice in various other manners without departing from the scope set forth in the appended claims.

## Claims

1. A communication apparatus for communicating with a plurality of base stations in an area covered by a plurality of sectors corresponding to said base stations, respectively, said communication apparatus comprising:
receiving means for receiving signals from said sectors;
first detecting means for detecting reversal of a relationship between reception levels of the signals from said first and said second sectors in said sectors;
second detecting means for detecting that a difference between the reception levels of said first and said second sectors becomes greater than a predetermined value;
calculating means for calculating a plurality of kinds of variation patterns for each of the signals from said first and said second sectors;
notifying means activated in response to at least one of a detection result of said first detecting means and a detection result of said second detecting means for notifying lapse of a predetermined time period; and
selecting means for selecting, as a selected sector, a particular sector suitable for connection with reference to a relationship between said first and said second sectors in variation patterns when said notifying means notifies the lapse of the predetermined time period.

2. A communication apparatus as claimed in claim 1, wherein said plurality of kinds of variation patterns are at least two of an average reception level of said signal over a predetermined time range, a variation amount of said signal over the predetermined time range, and a variation direction of said signal over the predetermined time range.

3. A communication apparatus for communicating with a plurality of base stations in an area covered by a plurality of sectors corresponding to said base stations, respectively, said communication apparatus comprising:
receiving means for receiving signals from said sectors;
first detecting means for detecting reversal of a relationship between reception levels of the signals from said first and said second sectors in said sectors;
second detecting means for detecting that a difference between the reception levels of said first and said second sectors becomes greater than a predetermined value;
calculating means for calculating a variation amount over a predetermined time range for each of the signals from said first and said second sectors;
notifying means activated in response to at least one of a detection result of said first detecting means and a detection result of said second detecting means for notifying lapse of a predetermined time period; and
selecting means for selecting, as a selected sector, a particular sector suitable for connection with reference to a relationship between said first and said second sectors in said variation amount when said notifying means notifies the lapse of the predetermined time period.

4. A communication apparatus for communicating with a plurality of base stations in an area covered by a plurality of sectors corresponding to said base stations, respectively, said communication apparatus comprising:
receiving means for receiving signals from said sectors;
first detecting means for detecting reversal of a relationship between reception levels of the signals from said first and said second sectors in said sectors;
second detecting means for detecting that a difference between the reception levels of said first and said second sectors becomes greater than a predetermined value;
calculating means for calculating a variation direction over a predetermined time range for each of the signals from said first and said second sectors;
notifying means activated in response to at least one of a detection result of said first detecting means and a detection result of said second detecting means for notifying lapse of a predetermined time period; and
selecting means for selecting, as a selected sector, a particular sector suitable for connection with reference to a relationship between said first and said second sectors in said variation direction when said notifying means notifies the lapse of the predetermined time period.

5. A communication apparatus as claimed in any one of claims 1 through 4, wherein said signal is a common pilot channel, said communication apparatus communicating with said base stations by CDMA.

6. A communication apparatus as claimed in any one of claims 1 through 5, wherein said predetermined time range is variable and determined with reference to a moving speed of said communication apparatus.

7. A communication system including:
a plurality of base stations;
a communication apparatus for communicating with said base stations in an area covered by a plurality of sectors corresponding to said base stations, respectively, and
switching means for switching a connected sector connected to said communication apparatus following movement of said communication apparatus;
said communication apparatus comprising:
receiving means for receiving signals from said sectors;
first detecting means for detecting reversal of a relationship between reception levels of the signals from said first and said second sectors in said sectors;
second detecting means for detecting that a difference between the reception levels of said first and said second sectors becomes greater than a predetermined value;
calculating means for calculating a plurality of kinds of variation patterns for each of the signals from said first and said second sectors;
notifying means activated in response to at least one of a detection result of said first detecting means and a detection result of said second detecting means for notifying lapse of a predetermined time period; and
selecting means for selecting, as a selected sector, a particular sector suitable for connection with reference to a relationship between said first and said second sectors in variation patterns when said notifying means notifies the lapse of the predetermined time period.

8. A communication system as claimed in claim 7, wherein said plurality of kinds of variation patterns are at least two of an average reception level of said signal over a predetermined time range, a variation amount of said signal over the predetermined time range, and a variation direction of said signal over the predetermined time range.

9. A communication system including:
a plurality of base stations;
a communication apparatus for communicating with said base stations in an area covered by a plurality of sectors corresponding to said base stations, respectively, and
switching means for switching a connected sector connected to said communication apparatus following movement of said communication apparatus;
said communication apparatus comprising:
receiving means for receiving signals from said sectors;
first detecting means for detecting reversal of a relationship between reception levels of the signals from said first and said second sectors in said sectors;
second detecting means for detecting that a difference between the reception levels of said first and said second sectors becomes greater than a predetermined value;
calculating means for calculating a variation amount over a predetermined time range for each of the signals from said first and said second sectors;
notifying means activated in response to at least one of a detection result of said first detecting means and a detection result of said second detecting means for notifying lapse of a predetermined time period; and
selecting means for selecting, as a selected sector, a particular sector suitable for connection with reference to a relationship between said first and said second sectors in said variation amount when said notifying means notifies the lapse of the predetermined time period.

10. A communication system including:
a plurality of base stations;
a communication apparatus for communicating with said base stations in an area covered by a plurality of sectors corresponding to said base stations, respectively, and
switching means for switching a connected sector connected to said communication apparatus following movement of said communication apparatus;
said communication apparatus comprising:
receiving means for receiving signals from said sectors;
first detecting means for detecting reversal of a relationship between reception levels of the signals from said first and said second sectors in said sectors;
second detecting means for detecting that a difference between the reception levels of said first and said second sectors becomes greater than a predetermined value;
calculating means for calculating a variation direction over a predetermined time range for each of the signals from said first and said second sectors;
notifying means activated in response to at least one of a detection result of said first detecting means and a detection result of said second detecting means for notifying lapse of a predetermined time period; and
selecting means for selecting, as a selected sector, a particular sector suitable for connection with reference to a relationship between said first and said second sectors in said variation direction when said notifying means notifies the lapse of the predetermined time period.

11. A communication system as claimed in any one of claims 7 through 10, wherein said communication apparatus communicates with said base stations by CDMA, said signal being a common pilot channel.

12. A communication system as claimed in any one of claims 7 through 11, wherein said communication apparatus reports a result of selection by said selecting means to said switching means through said base station;
said switching means switching the connected sector connected to said communication apparatus with reference to the result of selection reported thereto.

13. A communication system as claimed in any one of claims 7 through 12, wherein said predetermined time range is variable and determined with reference to a moving speed of said communication apparatus.
